# EUROPEAN PATENT APPLICATION

(11) **EP 4 807 222 A1**
(43) Date of publication of application: **16.09.2026**
(21) Application number: 26158956.8
(22) Date of filing: 17.02.2026
(51) Int. Cl.: F16K 1/04, F16K 31/04, F25B 41/35, F16K 31/50

(54) **MOTOR-OPERATED VALVE**

(30) Priority: 13.03.2025 JP 2025040598
(71) Applicant: Fujikoki Corporation, Tokyo 158-0082 (JP)
(72) Inventor: HORI, RYOTA, Tokyo, 1580082 (JP); MINATO, YUSUKE, Tokyo, 1580082 (JP)
(74) Representative: Ter Meer Steinmeister & Partner

(57) **Abstract**

A motor-operated valve (1) includes a rotor (51), a valve stem holder (52), a guide bush (53), and a stopper member (54). An internal thread (52t) is provided on the inner circumferential surface of a peripheral wall (52a) of the valve stem holder (52). An external thread (53t) is provided on the outer circumferential surface of a support portion (53b) of the guide bush (53). The valve stem holder (52) has an inner sliding surface (52u) facing radially outward, and the stopper member (54) has an outer sliding surface (54u) facing radially inward. When the valve stem holder (52) rotates, the inner sliding surface (52u) slides relative to the outer sliding surface (54u). A part of the inner sliding surface (52u) and a part of the outer sliding surface (54u) are radially aligned with an engagement area (S) between the internal thread (52t) and the external thread (53t).

## Description

### BACKGROUND OF THE INVENTION

### 1. Field of the Invention

The present invention relates to a motor-operated valve.

### 2. Description of the Related Art

Japanese Unexamined Patent Application Publication No. 2016-217451 discloses an example of a motor-operated valve according to the related art. The motor-operated valve includes a valve body, a valve member, a can, a rotor, a holder, a guide, a stopper member, and a coil spring.

The valve body has a valve port. The can is mounted on the valve body. The rotor is disposed inside the can. The holder is fixed to the rotor and rotates together with the rotor. The holder includes a peripheral wall, an upper end wall, and a movable stopper. A holder sliding surface and an internal thread are provided on the inner circumferential surface of the peripheral wall. The holder sliding surface is located above the internal thread. A stem hole is provided in the upper end wall. The movable stopper projects radially outward from the outer circumferential surface of the peripheral wall.

The guide is fixed to the valve body. The guide includes a support portion having a circular cylindrical shape. A guide sliding surface and an external thread are provided on the outer circumferential surface of the support portion. The guide sliding surface is located above the external thread and is in contact with the holder sliding surface. The external thread is screwed into the internal thread of the holder. The stopper member includes a stopper body and a fixed stopper. The stopper body has a circular cylindrical shape and is mounted on the guide. The fixed stopper projects radially outward from the outer circumferential surface of the stopper body.

The valve member includes a stem having a circular columnar shape and a plug portion connected to the stem. The stem extends through the support portion of the guide and the stem hole of the holder, and a retaining member is mounted on the upper end of the stem. The plug portion faces the valve port in an up-and-down direction. The stem has a spring receiving surface. The coil spring is disposed between the spring receiving surface and the upper end wall of the holder. The rotor and a stator constitute a motor. When current is supplied to the stator, the rotor and the holder rotate.

When the rotor and the holder rotate in a closing direction, a screw-feed action between the holder and the guide moves the rotor and the holder downward. The holder pushes the valve member downward via the coil spring. When the movable stopper comes into contact with the fixed stopper, the rotation of the rotor and the holder in the closing direction is restricted. At this time, the rotor is at a reference position.

When the rotor and the holder rotate in an opening direction, the screw-feed action between the holder and the guide moves the rotor and the holder upward. The holder pushes the retaining member upward, and the valve member moves upward, thereby increasing the opening degree of the valve port. When the valve member is positioned farthest from the valve port, the opening degree of the valve port reaches its maximum. At this time, the rotor is at a full-open position.

The holder sliding surface is in contact with the guide sliding surface, and the external thread is screwed into the internal thread, so that the central axis of the holder coincides with the central axis of the guide. However, the play between the external thread and the internal thread is larger than the clearance between the holder sliding surface and the guide sliding surface, and thus the central axis of a portion of the holder on which the internal thread is provided may be displaced from the central axis of the guide. In particular, when the rotor is positioned at or near the full-open position, both the contact area between the holder sliding surface and the guide sliding surface and the engagement area between the external thread and the internal thread are reduced, and the displacement of the central axis of the portion of the holder from the central axis of the guide becomes significant. Therefore, the rotor may come into contact with the can when the rotor rotates.

### SUMMARY OF THE INVENTION

Accordingly, it is an object of the present invention to provide a motor-operated valve capable of suppressing displacement of the central axis of a holder from the central axis of a guide.

To achieve the object above, a motor-operated valve according to the present invention includes: a valve body that has a valve port; a magnet rotor; a holder that rotates together with the magnet rotor; a valve member that moves toward the valve port when the holder rotates in a closing direction and that moves away from the valve port when the holder rotates in an opening direction; a guide that is fixed to the valve body; and an auxiliary guide that is fixed to the valve body or the guide. The holder includes a peripheral wall having a circular cylindrical shape, and an internal thread is provided on an inner circumferential surface of the peripheral wall. The guide includes a support portion having a circular cylindrical shape, and an external thread screwed into the internal thread is provided on an outer circumferential surface of the support portion. (i) The holder has an inner sliding surface facing radially outward, and the auxiliary guide has an outer sliding surface facing radially inward, or (ii) the holder has an outer sliding surface facing radially inward, and the auxiliary guide has an inner sliding surface facing radially outward. When the holder rotates, the inner sliding surface slides relative to the outer sliding surface. At least a part of the inner sliding surface and at least a part of the outer sliding surface are radially aligned with an engagement area between the internal thread and the external thread.

In the present invention, preferably, at least a part of a contact area between the inner sliding surface and the outer sliding surface is radially aligned with the engagement area.

In the present invention, preferably, the inner sliding surface facing radially outward is provided on an outer circumferential surface of the peripheral wall. Preferably, the auxiliary guide includes an auxiliary guide body having a circular cylindrical shape. Preferably, the outer sliding surface facing radially inward is provided on an inner circumferential surface of the auxiliary guide body.

In the present invention, preferably, the holder further includes an outer peripheral wall that has a circular cylindrical shape, and the outer peripheral wall is coaxial with the peripheral wall and surrounds the peripheral wall. Preferably, the outer sliding surface facing radially inward is provided on an inner circumferential surface of the outer peripheral wall. Preferably, the auxiliary guide includes an auxiliary guide body having a circular cylindrical shape. Preferably, the inner sliding surface facing radially outward is provided on an outer circumferential surface of the auxiliary guide body.

In the present invention, preferably, the holder further includes an end wall connected to a first end of the peripheral wall. Preferably, a holder sliding surface is further provided on the inner circumferential surface of the peripheral wall and is closer to the end wall than the internal thread. Preferably, a guide sliding surface is further provided on the outer circumferential surface of the support portion. Preferably, when the holder rotates, the holder sliding surface slides relative to the guide sliding surface.

In the present invention, preferably, the holder further includes a movable stopper. Preferably, the auxiliary guide further includes a fixed stopper. Preferably, when the magnet rotor rotates in the closing direction and reaches a reference position, the movable stopper comes into contact with the fixed stopper, and rotation of the magnet rotor in the closing direction is restricted.

In the present invention, preferably, when the magnet rotor is within a range from the reference position to a full-open position at which the valve member is farthest from the valve port, at least a part of a contact area between the inner sliding surface and the outer sliding surface is radially aligned with the engagement area.

According to the present invention, (i) the holder has the inner sliding surface facing radially outward, and the auxiliary guide has the outer sliding surface facing radially inward, or (ii) the holder has the outer sliding surface facing radially inward, and the auxiliary guide has the inner sliding surface facing radially outward. When the holder rotates, the inner sliding surface slides relative to the outer sliding surface. At least a part of the inner sliding surface and at least a part of the outer sliding surface are radially aligned with the engagement area between the internal thread and the external thread. With this configuration, the contact area between the inner sliding surface and the outer sliding surface is radially aligned with the engagement area, and the holder can be supported by the contact area. Therefore, displacement of the central axis of the holder from the central axis of the guide can be effectively suppressed.

### BRIEF DESCRIPTION OF THE DRAWINGS

Fig. 1 is a sectional view of a motor-operated valve according to a first embodiment of the present invention.
Fig. 2 is a sectional view of a valve body assembly of the motor-operated valve in Fig. 1 (a state in which a rotor is at a reference position).
Fig. 3 is another sectional view of the valve body assembly of the motor-operated valve in Fig. 1 (a state in which the rotor is at a full-open position).
Fig. 4 is a sectional view of a motor-operated valve according to a second embodiment of the present invention.
Fig. 5 is a sectional view of a valve body assembly of the motor-operated valve in Fig. 4 (a state in which a rotor is at a reference position).
Fig. 6 is another sectional view of the valve body assembly of the motor-operated valve in Fig. 4 (a state in which the rotor is at a full-open position).

### DESCRIPTION OF THE PREFERRED EMBODIMENTS

### (First Embodiment)

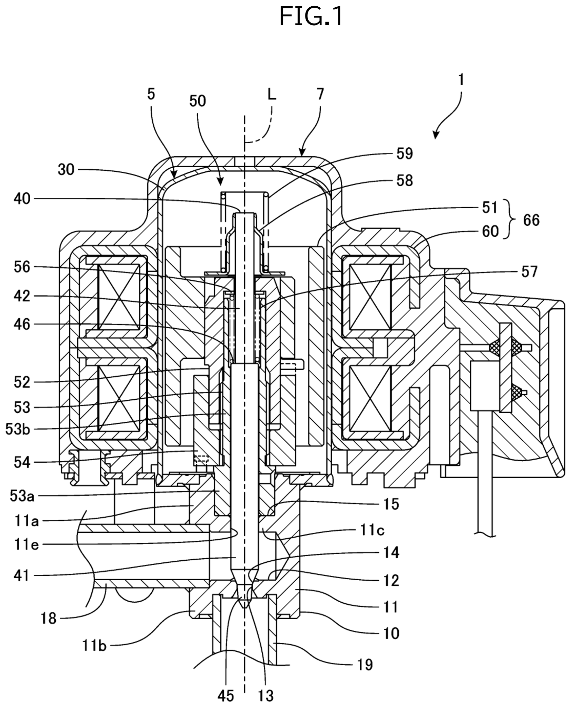

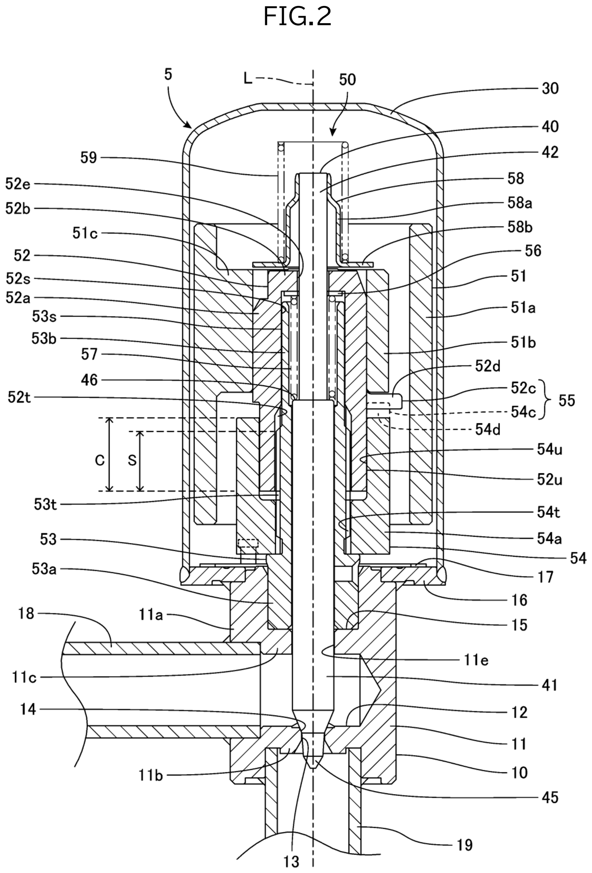

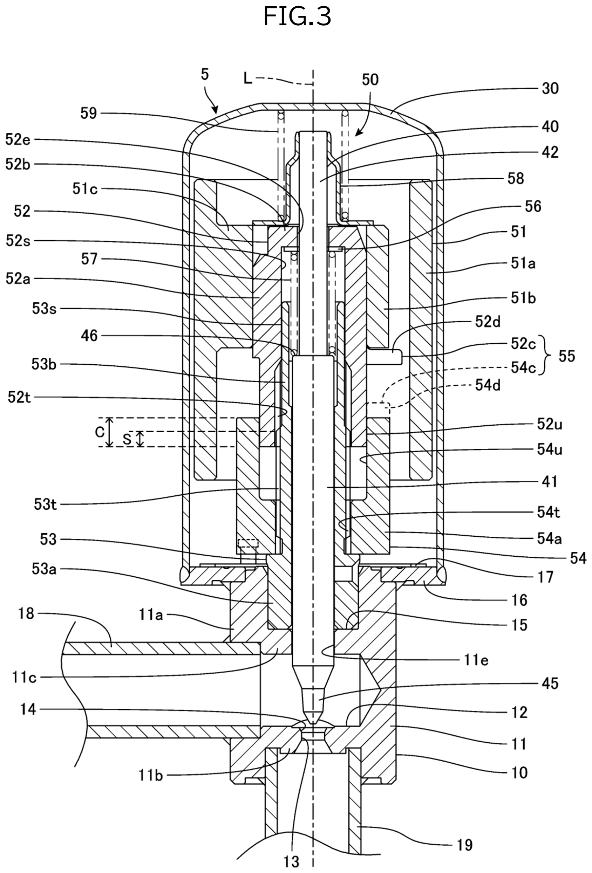

A motor-operated valve according to a first embodiment of the present invention is described below with reference to Figs. 1 to 3.

A motor-operated valve 1 according to the embodiment is, for example, incorporated in a refrigeration cycle system and is used as a flow control valve for controlling the flow rate of refrigerant.

The motor-operated valve 1 includes a valve body assembly 5 and a stator unit 7.

The valve body assembly 5 includes a valve body 10, a can 30, a valve member 40, and a driving mechanism 50.

The valve body 10 includes a housing 11 and a connection member 16.

The housing 11 has a valve chamber 12, a valve port 13, a valve seat 14, and a mounting hole 15. The valve port 13 is connected to the valve chamber 12. The valve seat 14 surrounds the valve port 13 in the valve chamber 12.

The housing 11 integrally includes a peripheral wall portion 11a having a circular cylindrical shape and a bottom wall portion 11b connected to the lower end of the peripheral wall portion 11a. A first conduit 18 connected to the valve chamber 12 is joined to the peripheral wall portion 11a. The valve port 13 is provided in the bottom wall portion 11b, and a second conduit 19 is joined to the bottom wall portion 11b and is connected to the valve port 13. The mounting hole 15 is provided in the upper surface of the housing 11. The housing 11 has a partition wall portion 11c separating the valve chamber 12 from the mounting hole 15. A first stem hole 11e connecting the valve chamber 12 to the mounting hole 15 is provided in the partition wall portion 11c. The first stem hole 11e is a circular hole. The connection member 16 has a circular annular plate-like shape. The inner peripheral edge of the connection member 16 is joined to the upper end of the peripheral wall portion 11a.

The can 30 has a circular cylindrical shape. The can 30 is open at the lower end and is closed at the upper end. The lower end of the can 30 is joined to the outer peripheral edge of the connection member 16.

The valve member 40 integrally includes a first stem portion 41, a second stem portion 42, and a plug portion 45. The valve member 40 is illustrated in front view in each figure.

The first stem portion 41 has a circular columnar shape. The diameter of the first stem portion 41 is equal to the diameter of the first stem hole 11e of the housing 11. The first stem portion 41 extends through the first stem hole 11e.

The second stem portion 42 has a circular columnar shape. The second stem portion 42 is coaxially connected to the upper end of the first stem portion 41. The diameter of the second stem portion 42 is smaller than the diameter of the first stem portion 41. A spring receiving surface 46 is provided in the part (the upper end surface of the first stem portion 41) where the second stem portion 42 is connected to the first stem portion 41. The spring receiving surface 46 is a circular annular plane facing upward. The first stem portion 41 and the second stem portion 42 form a stem of the valve member 40.

The plug portion 45 has a conical shape. The plug portion 45 is coaxially connected to the lower end of the first stem portion 41. The plug portion 45 is disposed in the valve chamber 12 and faces the valve port 13 and the valve seat 14 in an up-and-down direction. The tip end of the plug portion 45 is disposed in the valve port 13. When the plug portion 45 is in contact with the valve seat 14, the valve port 13 is closed. When the plug portion 45 is separated from the valve seat 14, the valve port 13 is open.

The driving mechanism 50 moves the valve member 40 in the up-and-down direction. The movement of the valve member 40 changes the opening degree of the valve port 13. The driving mechanism 50 includes a rotor 51, a valve stem holder 52, a guide bush 53, a stopper member 54, a washer 56, a valve closing spring 57, a retaining member 58, and a return spring 59.

The rotor 51 is disposed inside the can 30. The rotor 51 includes an outer cylinder portion 51a, an inner cylinder portion 51b, and multiple arm portions 51c. The rotor 51 has multiple magnetic poles. The magnetic poles are disposed on the outer circumferential surface of the outer cylinder portion 51a. The inner cylinder portion 51b is coaxially disposed inside the outer cylinder portion 51a. The arm portions 51c connect the outer cylinder portion 51a to the inner cylinder portion 51b. The rotor 51 is a magnet rotor.

The valve stem holder 52 integrally includes a peripheral wall 52a, an upper end wall 52b, and a movable stopper 52c. The valve stem holder 52 is fixed to the rotor 51 and rotates about an axis L together with the rotor 51. The valve stem holder 52 is a holder.

The peripheral wall 52a has a circular cylindrical shape. A holder sliding surface 52s and an internal thread 52t are provided on the inner circumferential surface of the peripheral wall 52a. The holder sliding surface 52s is a circular cylindrical surface facing radially inward. The internal thread 52t is disposed below the holder sliding surface 52s. An inner sliding surface 52u is provided on the lower part of the outer circumferential surface of the peripheral wall 52a. The inner sliding surface 52u is a circular cylindrical surface facing radially outward. The peripheral wall 52a is fitted into the inner cylinder portion 51b of the rotor 51.

The upper end wall 52b is connected to the upper end (a first end) of the peripheral wall 52a. The upper end wall 52b is an end wall. A second stem hole 52e is provided in the upper end wall 52b. The second stem hole 52e is a circular hole. The diameter of the second stem portion 42 of the valve member 40 is equal to the diameter of the second stem hole 52e. The second stem portion 42 extends through the second stem hole 52e.

The movable stopper 52c is provided on the outer circumferential surface of the peripheral wall 52a and projects radially outward. The movable stopper 52c is disposed above the inner sliding surface 52u. The movable stopper 52c has a stopper surface 52d. The stopper surface 52d faces frontward in Figs. 1 to 3.

The guide bush 53 integrally includes a base portion 53a and a support portion 53b. The guide bush 53 is fixed to the valve body 10. The guide bush 53 is a guide.

The base portion 53a has a circular cylindrical shape. The base portion 53a is press-fitted into the mounting hole 15 of the housing 11.

The support portion 53b has a circular cylindrical shape. The outer diameter of the support portion 53b is smaller than the outer diameter of the base portion 53a. The support portion 53b is coaxially connected to the upper end of the base portion 53a. A guide sliding surface 53s and an external thread 53t are provided on the outer circumferential surface of the support portion 53b. The guide sliding surface 53s is a circular cylindrical surface facing radially outward. The external thread 53t is disposed below the guide sliding surface 53s. The external thread 53t is screwed into the internal thread 52t of the valve stem holder 52. The guide sliding surface 53s is in contact with the holder sliding surface 52s over the entire circumference of the guide sliding surface 53s.

The first stem portion 41 and the second stem portion 42 of the valve member 40 are disposed inside the guide bush 53. The guide bush 53 supports the valve member 40 so as to be movable in the up-and-down direction.

The stopper member 54 integrally includes a stopper body 54a and a fixed stopper 54c. The stopper member 54 is positioned by a fixing bracket 17 joined to the connection member 16. The stopper member 54 is an auxiliary guide. The stopper body 54a is an auxiliary guide body.

The stopper body 54a has a circular cylindrical shape. An internal thread 54t and an outer sliding surface 54u are provided on the inner circumferential surface of the stopper body 54a. The internal thread 54t is disposed on the lower part of the inner circumferential surface of the stopper body 54a, and the outer sliding surface 54u is located on the upper part of the inner circumferential surface of the stopper body 54a. The external thread 53t of the guide bush 53 is screwed into the internal thread 54t, and the stopper member 54 is fixed to the guide bush 53. The stopper member 54 may be fixed to the valve body 10. The outer sliding surface 54u is a circular cylindrical surface facing radially inward. The outer sliding surface 54u is in contact with the inner sliding surface 52u over the entire circumference of the outer sliding surface 54u.

The fixed stopper 54c is provided on the upper end surface of the stopper body 54a and projects upward. The fixed stopper 54c has a stopper surface 54d. The stopper surface 54d faces rearward in Figs. 1 to 3.

The washer 56 has a circular annular plate-like shape. The washer 56 is disposed on the lower surface of the upper end wall 52b of the valve stem holder 52. The second stem portion 42 of the valve member 40 is disposed inside the washer 56.

The valve closing spring 57 is disposed between the spring receiving surface 46 of the valve member 40 and the washer 56. The second stem portion 42 of the valve member 40 is disposed inside the valve closing spring 57. The valve closing spring 57 is a compression coil spring and pushes the valve member 40 toward the valve seat 14.

The retaining member 58 integrally includes a fixed portion 58a and a flange portion 58b. The fixed portion 58a has a stepped circular cylindrical shape. The second stem portion 42 of the valve member 40 is disposed inside the fixed portion 58a. The fixed portion 58a is joined to the second stem portion 42. The flange portion 58b is connected to the lower end of the fixed portion 58a. The fixed portion 58a is disposed inside the return spring 59. The return spring 59 is a coil spring.

The stator unit 7 is mounted on the valve body assembly 5. The stator unit 7 includes a stator 60.

The stator 60 has a circular cylindrical shape. The can 30 is disposed inside the stator 60. The stator 60 includes a plurality of coils and a plurality of pole teeth. The pole teeth face the outer circumferential surface of the outer cylinder portion 51a of the rotor 51 with the can 30 interposed therebetween. When currents are supplied to the coils, the pole teeth are magnetized, thereby rotating the rotor 51. The rotor 51 and the stator 60 constitute a stepping motor 66. The rotor 51 and the stator 60 may constitute a motor other than a stepping motor.

In the motor-operated valve 1, the respective central axes of the valve body 10 (the housing 11 and the valve port 13), the can 30, the valve member 40, the rotor 51, the valve stem holder 52 (the peripheral wall 52a, the holder sliding surface 52s, the internal thread 52t, and the inner sliding surface 52u), the guide bush 53 (the support portion 53b, the guide sliding surface 53s, and the external thread 53t), the stopper member 54 (the stopper body 54a, the internal thread 54t, and the outer sliding surface 54u), and the stator 60 are aligned with the axis L. The radial direction is a direction perpendicular to the axis L. The valve body 10, the can 30, the valve member 40, the valve stem holder 52, the guide bush 53, the stopper member 54, and the washer 56 are made of a metal, such as brass or stainless steel, or a resin, and a material suitable for each of these components is selected.

An example of the operation of the motor-operated valve 1 is described below.

Currents are supplied to the coils of the stator 60. When the rotor 51 and the valve stem holder 52 rotate in a closing direction, a screw-feed action between the valve stem holder 52 and the guide bush 53 moves the rotor 51 and the valve stem holder 52 downward. The valve stem holder 52 pushes the valve member 40 downward via the washer 56 and the valve closing spring 57. The valve member 40 moves downward together with the valve stem holder 52. When the valve member 40 comes into contact with the valve seat 14, the downward movement of the valve member 40 stops.

When the rotor 51 and the valve stem holder 52 further rotate in the closing direction, the valve stem holder 52 and the washer 56 move downward, and the valve closing spring 57 is compressed, thereby pressing the valve member 40 against the valve seat 14. When the stopper surface 52d of the movable stopper 52c comes into contact with the stopper surface 54d of the fixed stopper 54c, the rotation of the rotor 51 in the closing direction is restricted. At this time, the rotor 51 is positioned at a reference position. The movable stopper 52c and the fixed stopper 54c constitute a stopper mechanism 55 that restricts the rotation of the rotor 51 in the closing direction when the rotor 51 is at the reference position.

Currents are supplied to the coils of the stator 60. When the rotor 51 and the valve stem holder 52 rotate in an opening direction, the screw-feed action between the valve stem holder 52 and the guide bush 53 moves the rotor 51 and the valve stem holder 52 upward. The valve stem holder 52 pushes the retaining member 58 upward, and the valve member 40 moves upward, thereby increasing the opening degree of the valve port 13. When the rotor 51 rotates in the opening direction and reaches a full-open position, the valve member 40 is positioned farthest from the valve port 13.

In the motor-operated valve 1, when the rotor 51 is within the range from the reference position to the full-open position, at least a part of the inner sliding surface 52u of the valve stem holder 52 and at least a part of the outer sliding surface 54u of the stopper member 54 are radially aligned with an engagement area S where the internal thread 52t of the valve stem holder 52 engages with the external thread 53t of the guide bush 53. That a part of the inner sliding surface 52u and a part of the outer sliding surface 54u are radially aligned with the engagement area S means that the positions of these parts in the direction of the axis L coincide with the position of the engagement area S in that direction. At least a part of a contact area C where the inner sliding surface 52u is in contact with the outer sliding surface 54u is radially aligned with the engagement area S. The inner sliding surface 52u and the outer sliding surface 54u are each a circular cylindrical surface. One of the inner sliding surface 52u and the outer sliding surface 54u may be a circular cylindrical surface, and the other may be composed of a plurality of circular arc surfaces arranged in the circumferential direction.

As described above, the motor-operated valve 1 includes the valve body 10, the rotor 51, the valve stem holder 52, the valve member 40, the guide bush 53, and the stopper member 54. The valve body 10 has the valve port 13. The valve stem holder 52 rotates together with the rotor 51.

The valve member 40 moves toward the valve port 13 when the valve stem holder 52 rotates in the closing direction, and the valve member 40 moves away from the valve port 13 when the valve stem holder 52 rotates in the opening direction. The guide bush 53 is fixed to the valve body 10. The stopper member 54 is fixed to the guide bush 53. The valve stem holder 52 includes the peripheral wall 52a having the circular cylindrical shape. The internal thread 52t is provided on the inner circumferential surface of the peripheral wall 52a. The inner sliding surface 52u facing radially outward is provided on the outer circumferential surface of the peripheral wall 52a. The guide bush 53 includes the support portion 53b having the circular cylindrical shape. The external thread 53t screwed into the internal thread 52t is provided on the outer circumferential surface of the support portion 53b. The stopper member 54 includes the stopper body 54a having the circular cylindrical shape. The outer sliding surface 54u facing radially inward is provided on the inner circumferential surface of the stopper body 54a. When the valve stem holder 52 rotates, the inner sliding surface 52u slides relative to the outer sliding surface 54u. A part of the contact area C between the inner sliding surface 52u and the outer sliding surface 54u is radially aligned with the engagement area S between the internal thread 52t and the external thread 53t. With this configuration, the valve stem holder 52 can be supported by the contact area C that is radially aligned with the engagement area S. Therefore, the displacement of the central axis of the valve stem holder 52 from the central axis of the guide bush 53 can be effectively suppressed.

The valve stem holder 52 includes the upper end wall 52b connected to the upper end of the peripheral wall 52a. The holder sliding surface 52s is provided on the inner circumferential surface of the peripheral wall 52a and is closer to the upper end wall 52b than the internal thread 52t. The guide sliding surface 53s is provided on the outer circumferential surface of the support portion 53b. When the valve stem holder 52 rotates, the holder sliding surface 52s slides relative to the guide sliding surface 53s. With this configuration, the valve stem holder 52 can be supported by a contact area between the holder sliding surface 52s and the guide sliding surface 53s. Therefore, the displacement of the central axis of the valve stem holder 52 from the central axis of the guide bush 53 can be more effectively suppressed.

The valve stem holder 52 includes the movable stopper 52c. The stopper member 54 includes the fixed stopper 54c. When the rotor 51 rotates in the closing direction and reaches the reference position, the movable stopper 52c comes into contact with the fixed stopper 54c, thereby restricting the rotation of the rotor 51 in the closing direction. With this configuration, the stopper member 54 forms the contact area C together with the valve stem holder 52 and restricts the rotation of the rotor 51 in the closing direction at the reference position. Therefore, since the stopper member 54 also functions as an auxiliary guide that forms the contact area C together with the valve stem holder 52, no separate auxiliary guide is required, and an increase in the number of components of the motor-operated valve 1 can be suppressed. The motor-operated valve 1 may include an auxiliary guide that is separate from the stopper member 54 and has an outer sliding surface that slides relative to the inner sliding surface 52u of the valve stem holder 52.

### (Second Embodiment)

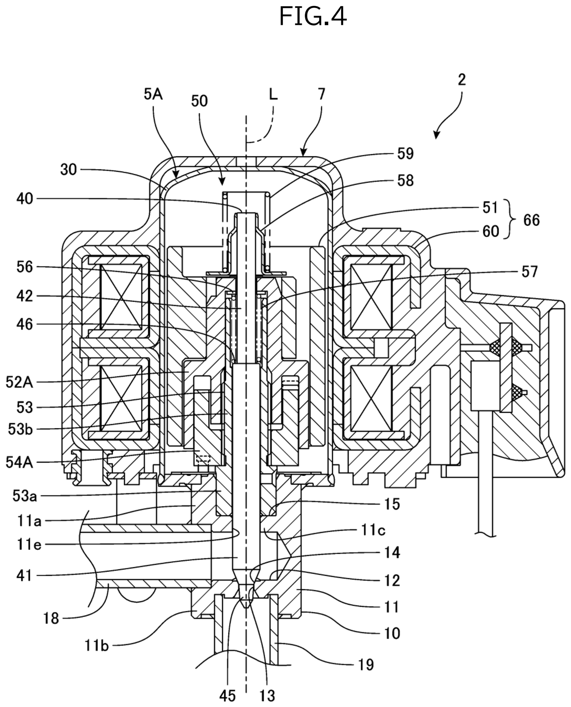

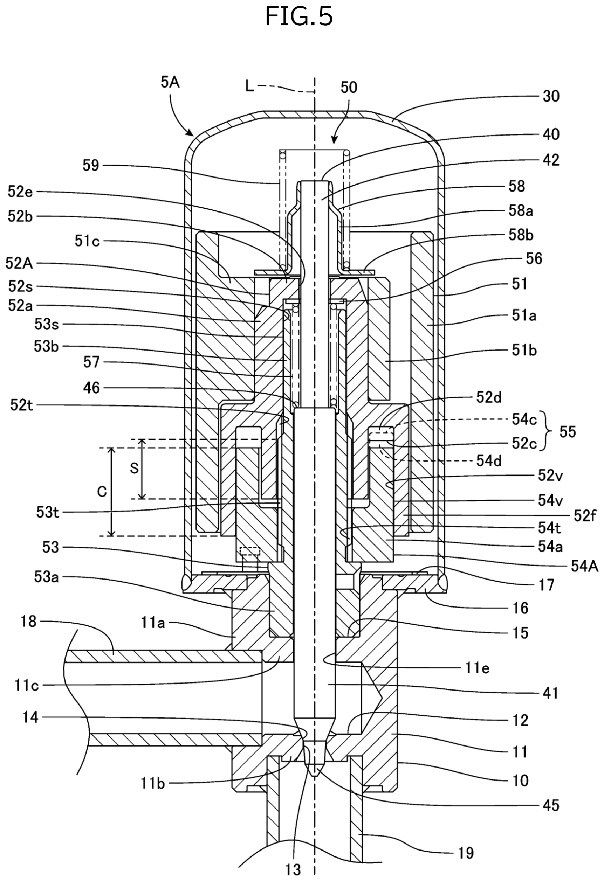

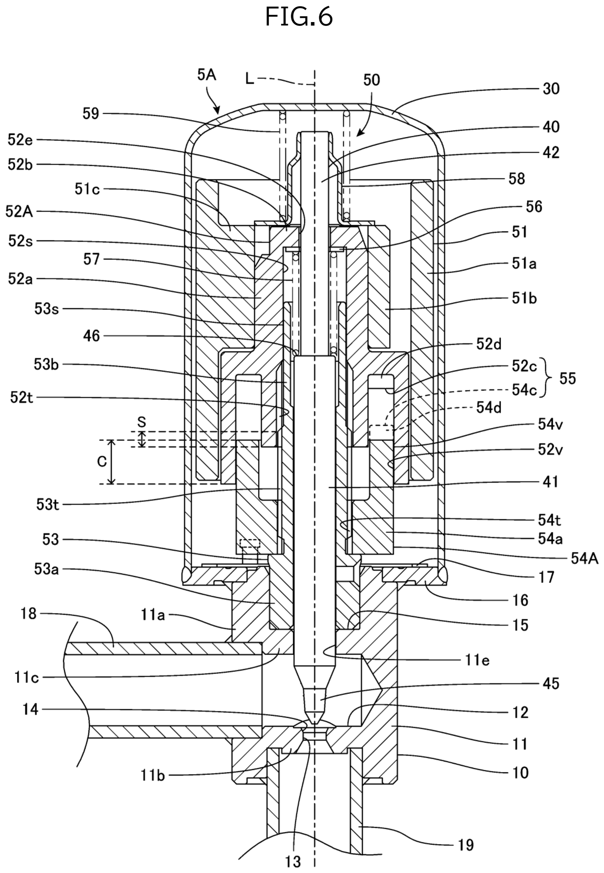

A motor-operated valve according to a second embodiment of the present invention is described below with reference to Figs. 4 to 6.

A motor-operated valve 2 according to the embodiment has the same or substantially the same configuration as that of the motor-operated valve 1, except that, instead of the valve body assembly 5 including the valve stem holder 52 and the stopper member 54, the motor-operated valve 2 includes a valve body assembly 5A including a valve stem holder 52A and a stopper member 54A. In the motor-operated valve 2, elements having the same configurations as those of the motor-operated valve 1 are denoted by the same reference signs as those of the motor-operated valve 1, and detailed descriptions of these elements are omitted.

The valve stem holder 52A integrally includes a peripheral wall 52a, an upper end wall 52b, a movable stopper 52c, and an outer peripheral wall 52f. The valve stem holder 52A is fixed to a rotor 51 and rotates about an axis L together with the rotor 51. The valve stem holder 52A is a holder.

The outer peripheral wall 52f has a circular cylindrical shape. The outer peripheral wall 52f surrounds the lower part of the peripheral wall 52a and is coaxial with the peripheral wall 52a. The lower end of the outer peripheral wall 52f is below the lower end of the peripheral wall 52a. An outer sliding surface 52v is provided on the inner circumferential surface of the outer peripheral wall 52f. The outer sliding surface 52v is a circular cylindrical surface facing radially inward.

The movable stopper 52c is provided between the peripheral wall 52a and the outer peripheral wall 52f. The movable stopper 52c is disposed above the outer sliding surface 52v. The movable stopper 52c has a stopper surface 52d. The stopper surface 52d faces frontward in Figs. 4 to 6.

The stopper member 54A integrally includes a stopper body 54a and a fixed stopper 54c. The stopper member 54A is positioned by a fixing bracket 17 joined to a connection member 16. The stopper member 54A is an auxiliary guide. The stopper body 54a is an auxiliary guide body.

The stopper body 54a has a circular cylindrical shape. An internal thread 54t is provided on the inner circumferential surface of the stopper body 54a. The internal thread 54t is disposed on the lower part of the inner circumferential surface of the stopper body 54a. An external thread 53t of a guide bush 53 is screwed into the internal thread 54t, and the stopper member 54A is fixed to the guide bush 53. The stopper member 54A may be fixed to a valve body 10. An inner sliding surface 54v is provided on the outer circumferential surface of the stopper body 54a. The inner sliding surface 54v is a circular cylindrical surface facing radially outward. The inner sliding surface 54v is in contact with the outer sliding surface 52v over the entire circumference of the inner sliding surface 54v.

The fixed stopper 54c is provided on the upper end surface of the stopper body 54a and projects upward. The fixed stopper 54c has a stopper surface 54d. The stopper surface 54d faces rearward in Figs. 4 to 6.

In the motor-operated valve 2, when the rotor 51 is within a range from a reference position to a full-open position, at least a part of the outer sliding surface 52v of the valve stem holder 52A and at least a part of the inner sliding surface 54v of the stopper member 54A are radially aligned with an engagement area S between an internal thread 52t of the valve stem holder 52A and the external thread 53t of the guide bush 53. At least a part of a contact area C between the outer sliding surface 52v and the inner sliding surface 54v is radially aligned with the engagement area S.

As described above, the motor-operated valve 2 includes the valve body 10, the rotor 51, the valve stem holder 52A, a valve member 40, the guide bush 53, and the stopper member 54A. The valve body 10 has a valve port 13. The valve stem holder 52A rotates together with the rotor 51. The valve member 40 moves toward the valve port 13 when the valve stem holder 52A rotates in a closing direction, and the valve member 40 moves away from the valve port 13 when the valve stem holder 52A rotates in an opening direction. The guide bush 53 is fixed to the valve body 10. The stopper member 54A is fixed to the guide bush 53. The valve stem holder 52A includes the peripheral wall 52a that has a circular cylindrical shape and the outer peripheral wall 52f that has the circular cylindrical shape. The outer peripheral wall 52f is coaxial with the peripheral wall 52a and surrounds the peripheral wall 52a. The internal thread 52t is provided on the inner circumferential surface of the peripheral wall 52a. The outer sliding surface 52v facing radially inward is provided on the inner circumferential surface of the outer peripheral wall 52f. The guide bush 53 includes a support portion 53b having a circular cylindrical shape. The external thread 53t screwed into the internal thread 52t is provided on the outer circumferential surface of the support portion 53b. The stopper member 54A includes the stopper body 54a having the circular cylindrical shape. The inner sliding surface 54v facing radially outward is provided on the outer circumferential surface of the stopper body 54a. When the valve stem holder 52A rotates, the outer sliding surface 52v slides relative to the inner sliding surface 54v. A part of the contact area C between the outer sliding surface 52v and the inner sliding surface 54v is radially aligned with the engagement area S between the internal thread 52t and the external thread 53t.

The motor-operated valve 2 has the same functions and effects as those of the motor-operated valve 1 described above.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member. Additionally, in this specification, the term "the same" may include strictly the same and substantially the same.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

## Claims

1. A motor-operated valve (1, 2) comprising:
a valve body (10) that has a valve port (13);
a magnet rotor (51);
a holder (52, 52A) that rotates together with the magnet rotor (51);
a valve member (40) that moves toward the valve port (13) when the holder (52, 52A) rotates in a closing direction and that moves away from the valve port (13) when the holder (52, 52A) rotates in an opening direction;
a guide (53) that is fixed to the valve body (10); and
an auxiliary guide (54, 54A) that is fixed to the valve body (10) or the guide (53),
wherein the holder (52, 52A) includes a peripheral wall (52a) having a circular cylindrical shape, and an internal thread (52t) is provided on an inner circumferential surface of the peripheral wall (52a),
wherein the guide (53) includes a support portion (53b) having a circular cylindrical shape, and an external thread (53t) screwed into the internal thread (52t) is provided on an outer circumferential surface of the support portion (53b),
wherein (i) the holder (52) has an inner sliding surface (52u) facing radially outward, and the auxiliary guide (54) has an outer sliding surface (54u) facing radially inward, or (ii) the holder (52A) has an outer sliding surface (52v) facing radially inward, and the auxiliary guide (54A) has an inner sliding surface (54v) facing radially outward,
wherein when the holder (52, 52A) rotates, the inner sliding surface (52u, 54v) slides relative to the outer sliding surface (54u, 52v), and
wherein at least a part of the inner sliding surface (52u, 54v) and at least a part of the outer sliding surface (54u, 52v) are radially aligned with an engagement area (S) between the internal thread (52t) and the external thread (53t).

2. The motor-operated valve (1) according to Claim 1,
wherein the inner sliding surface (52u) facing radially outward is provided on an outer circumferential surface of the peripheral wall (52a),
wherein the auxiliary guide (54) includes an auxiliary guide body (54a) having a circular cylindrical shape, and
wherein the outer sliding surface (54u) facing radially inward is provided on an inner circumferential surface of the auxiliary guide body (54a).

3. The motor-operated valve (2) according to Claim 1,
wherein the holder (52A) further includes an outer peripheral wall (52f) that has a circular cylindrical shape, and the outer peripheral wall (52f) is coaxial with the peripheral wall (52a) and surrounds the peripheral wall (52a),
wherein the outer sliding surface (52v) facing radially inward is provided on an inner circumferential surface of the outer peripheral wall (52f),
wherein the auxiliary guide (54A) includes an auxiliary guide body (54a) having a circular cylindrical shape, and
wherein the inner sliding surface (54v) facing radially outward is provided on an outer circumferential surface of the auxiliary guide body (54a).

4. The motor-operated valve (1, 2) according to Claim 1,
wherein the holder (52, 52A) further includes an end wall (52b) connected to a first end of the peripheral wall (52a),
wherein a holder sliding surface (52s) is further provided on the inner circumferential surface of the peripheral wall (52a) and is closer to the end wall (52b) than the internal thread (52t),
wherein a guide sliding surface (53s) is further provided on the outer circumferential surface of the support portion (53b), and
wherein when the holder (52, 52A) rotates, the holder sliding surface (52s) slides relative to the guide sliding surface (53s).

5. The motor-operated valve (1, 2) according to Claim 1,
wherein the holder (52, 52A) further includes a movable stopper (52c),
wherein the auxiliary guide (54, 54A) further includes a fixed stopper (54c), and
wherein when the magnet rotor (51) rotates in the closing direction and reaches a reference position, the movable stopper (52c) comes into contact with the fixed stopper (54c), and rotation of the magnet rotor (51) in the closing direction is restricted.

6. The motor-operated valve (1, 2) according to Claim 5, wherein when the magnet rotor (51) is within a range from the reference position to a full-open position at which the valve member (40) is farthest from the valve port (13), at least a part of a contact area (C) between the inner sliding surface (52u, 54v) and the outer sliding surface (54u, 52v) is radially aligned with the engagement area (S).
